# EUROPEAN PATENT SPECIFICATION

(11) **EP 2 361 193 B1**
(45) Date of publication and mention of the grant of the patent: **18.12.2013**
(21) Application number: 09801828.6
(22) Date of filing: 24.12.2009
(51) Int. Cl.: B60R 25/24, E05B 65/12

(54) **DOOR HANDLE AND LOCKING SYSTEM FOR VEHICLE**
Türgriff und Fahrzeugverriegelungssystem
POIGNÉE DE PORTE ET SYSTÈME DE VERROUILLAGE POUR VÉHICULE

(30) Priority: 13.01.2009 JP 2009005006
(43) Date of publication of application: 31.08.2011
(73) Proprietor: Aisin Seiki Kabushiki Kaisha, Aichi 448-8650 (JP); TOYOTA JIDOSHA KABUSHIKI KAISHA, Toyota-shi, Aichi-ken, 471-8571 (JP)
(72) Inventor: IEDA, Kiyokazu, Kariya-shi Aichi 448-8650 (JP); MURAKAMI, Yuichi, Kariya-shi Aichi 448-8650 (JP); OKADA, Hiroki, Toyota-shi Aichi 471-8571 (JP)
(74) Representative: TBK
(86) International application number: PCT/JP2009/071883
(87) International publication number: WO 2010/082448

(56) References cited:
- EP-A1- 1 950 107
- WO-A1-2007/003534
- DE-A1- 10 360 418
- US-B1- 7 375 299

## Description

### Technical Field

The present invention relates to a door handle for a vehicle, configured to be provided in a vehicle that mounts a locking system for authenticating a mobile device carried by a user through wireless communication between this mobile device and the vehicle and controlling locking/unlocking of a door of the vehicle based on detection of presence/absence of an operation by the user of commanding a predetermined locking/unlocking operation. The invention relates also to such locking system.

### Background Art

There is known a locking system configured to effect communication between a mobile device carried by a user and a main system unit provided on the vehicle so as to authenticate this mobile device, thereby to effect automatic door locking or unlocking operation ("Smart Entry System"). US 2007/0216175A1 (Patent Document 1) discloses a technique for a vehicle door handle configured such that a locking/unlocking operation of a vehicle door is effected based on detection of a user's operation to a door handle such as user's touching the door handle. The door handle incorporates therein such components as a transmitter antenna for transmitting a request signal to a portable device, a capacitance sensor for detecting touching or approaching of a person's hand on/to the door handle, etc. From the door handle, a connector is provided to extend through an outer panel of the door and to this connector, there is connected a wire harness which in turn is connected to a transmitter unit mounted to a frame disposed adjacent the door.

US6,768,413 B1 (Patent Document 2) discloses an outer door handle (15) incorporating therein such components as a transmitter/receiver antenna (33) for effecting transmission/reception to/from a mobile device, a transmission/reception unit (32), a capacitive sensor (31), etc. The numerals in the parentheses above are those used in Patent Document 2. Transmission/reception with a mobile device (data carrier (20)) and detection of a human hand are effected within the door handle (15). But, the connection between an electric control device (30) mounted on the vehicle and the transmitter/receiver unit (32) or the capacitive sensor (31) is a wired connection using electric lines (18, 19, 36).

JP 10-317754A (Patent Document 3) discloses a technique relating to a locking system, in which transmitter antennas (18a, 18b, 18c) are provided independently in a plurality of doors of a vehicle, so that the system is capable of appropriately distinguishing which door a user intends to lock/unlock. The numerals in the parentheses above are those used in Patent Document 3. The transmitter antennas (18a, 18b, 18c) are mounted to the respective doors such as the driver's seat door, a passenger's seat door, a trunk room door, in the vicinities of a door knob, a side view mirror, an emblem mark provided on the truck room door. These antennas are connected to a single transmitter (16), which in turn is connected to an ECU (10). Signal transmission between a mobile device (24) and the transmitter (16) is effected in a wireless manner via the transmitter antennas (18a, 18b, 18c). Further signal transmission between the mobile device (24) and a receiver unit (20) is also effected in wireless manner, via a receiver antenna (22). These wireless transmissions are described in Patent Document 2 and this document explicitly describes carrier wave frequencies employed for these transmissions. On the other hand, the document (Patent Document 2) lacks any explicit or implicit description suggesting the signal transmission between the transmitter (16) or the receiver unit (20) and the ECU (10) being effected in wireless manner. So, it is understood that this signal transmission is effected via wired connection.

JP 10-169279 A (Patent Document 4) discloses a technique relating to a keyless entry system that uses a push-switch type keyless entry system and a wireless type keyless entry system in combination. The conventional push-switch type keyless entry system requires wired connection between a commander unit (21) and a stationary unit (13). Instead of this, by enabling wireless communication between the commander unit (21) and the stationary unit (13), the mounting of the system is made easier. The numerals in the parentheses above are those used in Patent Document 4.

US 2007/0230201 A1 (Patent Document 5) discloses a technique relating to a door handle for use in a keyless entry system, configured to enable visual confirmation of a locked/unlocked condition of a door. In this door handle disclosed in Patent Document 5, electric power needed for illumination of an light emitting means incorporated within this door handle is provided through electromagnetic induction arrangement. More particularly, inside the door, there are provided an inverter circuit and a primary coil, whereas a secondary coil is provided in a handle body of the door handle that projects on the outside of the door, so as to supply power to the light emitting means incorporated within the door handle in the wireless manner.
*Further prior art can be found in document* EP 1 950 107 A1*, disclosing a door handle and a locking system for vehicle, in particular a door handle for a vehicle with the features according to the preamble of appended independent claim 1 and a locking system with the features according to the preamble of appended independent claim 7.*

### Citation List

### Patent Literature

Patent Document 1 : US 2007/0216175 A1 ([00251-[00371, etc.)
Patent Document 2 : US 6, 768, 413 B1 (column, 2, L32 through column 4, L33, Figs. 1-5, etc.)
Patent Document 3 : JP 10-317754 A ([0029] to [0030], Fig, 1, Fig. 11, etc.)
Patent Document 4 : JP 10-169279 A ([0021] to [0045], [0068], Fig. 1, Fig. 4, etc.)
Patent Document 5 : US 2007/0230201 A1 ([0002] to [0005], Figs. 1-3, etc.)

### Summary of the Invention

In the case of the systems disclosed in Patent Documents 1-3 above, the electric circuits incorporated within the door handle and the electric circuits disposed inside the door panel or the vehicle body are connected via wires. Although certain arrangements such as forming a connector housing, restricting the number of wires are provided, these arrangements do not eliminate the wires entirely.

The system disclosed in Patent Document 4 differs from the Smart Entry (locking) System configured to effect automatic door locking/unlocking based on result of detection of a user's operation to the vehicle and on a user authentication via wireless communication. Namely, unlike the Smart Entry System, the Patent Document 4 system is configured to effect door locking/unlocking by remote control. Specifically, in this system, a remote control signal is transmitted from the mobile device (6) or the commander unit (21) to the stationary unit (13), and no request signal is transmitted from the vehicle side to the mobile device (6) or to the commander unit (21) (The numerals in the parentheses above are those used in Patent Document 4). The commander unit (21) is deemed substantially equivalent in its function to the mobile device (6), though being different from the latter in that this commander unit (21) is fixedly mounted rather than being carried and the unit is provided with a secret number key. Further, with this system, there are no needs of authenticating a user by wireless communication or detecting a user's operation to the vehicle such as the user's hand touching the vehicle. Therefore, unlike the systems disclosed in Patent Documents 1-3, it is not needed for the Patent Document 4 system to incorporate any electric circuits in the door handle. And, this system has no need for wired connection between the door panel and the door handle, as a matter of course.

The electric circuit incorporated within the door handle disclosed in Patent Document 5 need not be wire-connected with the electric circuits inside the door panel or the vehicle body, so electric wiring can be omitted. However, the system implemented by this door handle also differs from the locking system (smart entry system) configured to effect automatic door locking/unlocking based on result of detection of a user's operation to the vehicle and on a user's authentication via wireless communication. Namely, the Patent Document 5 system is configured simply such that in a system of effecting door locking/unlocking by remote control, the locked/unlocked condition of the door is reported or alerted by the light emitting means. Further, as shown in Fig. 1B of Patent Document 5, because of a significant distance between the door panel and the door handle, the system requires a rather large power on the primary side for the electromagnetic connection arrangement. This increases the load on the battery mounted on the vehicle body.

In the case of the respective conventional systems described above, when an electric wire is needed in connecting the electric circuit inside the door panel and the electric circuit in the vehicle body, it is necessary to lay this electric wire, with circumventing such movable component as a windowpane that moves into and out of the door panel. This necessity highly likely results in such inconvenience as prolongation of the wire-laying path of the electric wire, need for some protector for the wire.

In view of the above-described state of the art, for use in a locking system configured for authenticating a mobile device carried by a user through wireless communication with this mobile device and the vehicle and controlling locking/unlocking of a door based on detection of presence/absence of an operation by the user for commanding a predetermined locking/unlocking operation, there is a need for an improved door handle arrangement for a vehicle that allows independent constructions of a circuit mounted on the vehicle side including the door handle having the vehicle door handle and a circuit mounted within this door handle, with elimination of electric wires therebetween. And, an improved locking system using such door handle for a vehicle is also needed.

For accomplishing the above-noted object, according to one aspect of the present invention, there is provided a door handle for a vehicle, configured to authenticate a mobile device carried by a user through wireless communication between this mobile device and the vehicle and to control locking/unlocking of a vehicle door based on detection of presence/absence of an operation by the user of commanding a predetermined locking/unlocking operation, the door handle comprising:
an operation detecting unit for detecting an operation on the vehicle door handle as an operation commanding locking/unlocking to the vehicle;
a transmitter antenna having sensitivity in a predetermined frequency range;
a transmitter unit configured to modulate result of detection by said operation detecting unit with using a carrier wave having said predetermined frequency range and transmitting the detection result to the vehicle via said transmitter antenna;
a battery for supplying power to said operation detecting unit and said transmitter unit; and
a housing configured to accommodate therein said operation detecting unit, said transmitter antenna, said transmitter unit and said battery altogether, without any wires extending to the outside of the housing.

With this construction, result of detection by the operation detecting unit that is accommodated inside the housing of the vehicle door handle (to be referred to as the "door handle" hereinafter, when appropriate) is received wirelessly by the transmitter unit and the transmitter antenna that are also accommodated inside the housing. Therefore, the housing is formed with extension of no electric wires to its outside, so that it becomes possible to eliminate the electric wires between the circuit mounted on the vehicle side including the door panel having the door handle and the circuit mounted inside the door handle. Further, as the battery for supplying power to the operation detecting unit and the transmitter unit is also accommodated inside the housing, the door handle can be constructed as an electrically independent integral unit. As a result, it becomes possible also to reduce the number of steps required for mounting the door handle to the vehicle door, whereby the productivity will be improved. Moreover, because of no need for wiring between the door handle and the vehicle side, it is possible to employ the same door handle in various types of vehicles. Consequently, cost reduction of the door handle through its mass production is made possible.

Preferably, the transmitter unit modulates the result of detection by the operation detecting unit with using the carrier wave having a same frequency range as a frequency range of a carrier wave to be demodulated by a receiver unit provided in the vehicle for receiving a wireless signal from the mobile device.

With the above construction, it is possible to utilize the receiver unit provided originally in the locking system also as a receiver unit that receives result of detection by the operation detecting unit. As a result, the elimination of the wiring between the circuit mounted on the vehicle side including the door panel and the circuit mounted inside the door handle can be realized at low cost. Further, it becomes readily possible to replace the conventional door handle requiring wiring by the inventive door handle. Therefore, this inventive door handle will find application in various types of vehicles, without requiring any substantive design change.

Preferably, said operation detecting unit of the vehicle door handle of the invention is configured to operate intermittently to enable detection of locking/unlocking command by a predetermined cycle.

As the operation detecting unit operates intermittently, it is possible to save power consumption of the battery, so that the vehicle door handle can operate for a longer period of time.

Preferably, said transmitter unit of the vehicle door handle of the invention is configured to pause until detection by the operation detecting unit of presence of the locking/unlocking command and to be activated in response to the detection of presence of the locking/unlocking command.

Unless the operation detecting unit detects presence of locking/unlocking command, a locking/unlocking operation of the door is not effected. Therefore, it is not needed to transmit "absence of locking/unlocking command" as detection result. Hence, if the transmitter unit is configured to pause until detection of "presence of locking/unlocking command" and is activated only in response to the detection of "presence of locking/unlocking command" as proposed above, consumption of power during the pause period can be saved. As a result, it is possible to save power consumption of the battery, so that the vehicle door handle can operate for a longer period of time.

Further, preferably, said operation detecting unit of the vehicle door handle of the invention comprises a capacitance sensor having at least one sensor electrode, and said transmitter antenna co-uses said one sensor electrode.

Detection of the user's command for locking/unlocking is possible through detection of the user's attempt to grip the door handle. For instance, an approaching or touching motion of the user's hand to the door handle can be detected as the detection of presence of locking/unlocking command. And, for such detection of approaching or touching of the user's hand, a capacitance sensor can be used advantageously. And, as this capacitance sensor uses a plate-like sensor electrode, by causing this sensor electrode to be used also by the transmitter antenna, further cost reduction of the vehicle door handle is made possible.

Further, preferably, said operation detecting unit of the vehicle door handle of the invention includes a locking operation detecting subunit for detecting a user's command for locking operation and an unlocking operation detecting subunit for detecting a user's command for unlocking operation.

With this construction, it possible to detect separately a command for locking operation and a command for unlocking operation. As a result, it becomes possible to simplify the control circuit and/or control program provided on the vehicle side. Further, it is understood that between a locking operation and an unlocking operation, the user's natural motions to the door handle therefor should differ from each other. Namely, in the case of a locking operation, there is high likelihood of the user's inserting his/her hand between the door handle and the door panel so as to grip the door handle for opening the door. On the other hand, in the case of an unlocking operation, the user's hand may not be inserted between the door handle and the door panel. Then, with separate detection of a locking command and an unlocking command, the respective operation detecting subunits may be disposed at respectively appropriate positions in view of the above-described different user's movements for the locking and unlocking operations, so that these two operational commands can be detected appropriately and reliably as being distinct from each other.

Preferably, said housing of the vehicle door handle of the invention includes a power generator unit configured to generate power in response to vibration, and said battery is a rechargeable battery configured be charged by power generated by said power generator unit.

In general, a running vehicle generates or encounters small vibrations such as vibration from the running engine, vibration received in association with running of the vehicle, etc. Techniques have been developed a technique to generate power with utilizing such small vibrations. And, if power generated in this way is charged to the rechargeable battery, the operating detecting unit and the transmitter unit can be operated for an extended period of time. This arrangement permits conversion of energy of small vibrations, which would normally or otherwise be wasted, into useful energy. And, compared with an arrangement of wireless power supply from the vehicle side with utilization of electromagnetic conduction technique, the above arrangement is advantageous in lessening the load applied to the battery on the vehicle.

For accomplishing the above-noted object, according to a further aspect of the invention, there is provided a locking system comprising:
a first transmitter antenna mounted on a vehicle and having sensitivity in a first frequency range;
a first transmitter unit provided in the vehicle and configured to modulate request information with using a carrier wave having said first frequency range and transmit a request signal via said first transmitter antenna;
a mobile device carried by a user and configured to receive said request signal and transmit a response signal modulated with using a carrier wave having a second frequency range;
a first receiver antenna provided in the vehicle and having sensitivity in said second frequency range;
a first receiver unit provided in the vehicle and configured to receive the response signal via said first receiver antenna and demodulate this to response information;
an operation detecting unit accommodated inside a housing of a door handle provided in a door of the vehicle without any electric wiring extending to the outside of the housing, said operation detecting unit being configured to detect presence/absence of a command by said user of a predetermined locking/unlocking operation to said door handle;
a second transmitter antenna accommodated inside said housing and having sensitivity in a third frequency range;
a second transmitter unit accommodated inside said housing and configured to modulate operation command information as result of detection by said operation detecting means, with using a carrier wave having said third frequency range and transmit an operation command signal via said second transmitter antenna;
a second receiver unit provided in the vehicle and configured to receive said operation command signal via said second receiver antenna and demodulate this signal to operation command information; and
a locking/unlocking controller unit provided in the vehicle and configured to control locking/unlocking of a door of the vehicle, based upon said response information and said operation command information.

With the above-described construction, result of detection by the operation detecting unit that is accommodated inside the housing of the vehicle door handle is received wirelessly by the transmitter unit and the transmitter antenna that are also accommodated inside the housing. Therefore, the housing is formed without allowing extension of any wires to its outside, so that it becomes possible to eliminate the electric wires between the circuit mounted on the vehicle side including the door panel having the door handle and the circuit mounted inside the door handle.

Preferably, in the locking system relating to the present invention, said second frequency range is a frequency range that is different from said first frequency range and said third frequency range is a frequency range that is same as said second frequency range.

With the above-described construction, distinction is made possible between the frequency range of the signal received by the mobile device and the frequency range of the signal received by the vehicle. Hence, a system free from crosstalk or interference can be provided. Further, since the three frequency ranges used by the locking system for communication are reduced in number to the two frequency ranges, not only crosstalk or the like can be effectively restricted, but also the system can be simple.

Preferably, in the inventive locking system, said first receiver antenna acts also as said second receiver antenna and said first receiver unit acts also as said second receiver unit.

With the above-described construction, the first receiver unit and the second receiver unit can be integrated as one receiver unit and also the first receiver antenna and the second receiver antenna can be integrated as one receiver antenna. Accordingly, the locking system as a whole can be constructed at lower costs.

### Brief Description of the Drawings

Fig. 1 is a perspective view showing an example of a door equipped with a door handle for a vehicle relating to the present invention,
Fig. 2 is a block diagram schematically illustrating an example of system construction of the locking system,
Fig. 3 is a side view showing an example of a door handle body,
Fig. 4 is a block diagram schematically illustrating an exemplary construction of the inside of the handle body, and
Fig. 5 is a block diagram schematically illustrating an example of further construction of the inside of the handle body.

### Description of Embodiments

Next, embodiments of the present invention will be described with reference to the accompanying drawings. In the following discussion, a door handle for a vehicle will be referred to simply as a "door handle" for the sake of convenience. Further, a locking system relating to the embodiments is a system (smart entry system) configured to authenticate a mobile device carried by a user through wireless communication between this mobile device and the vehicle and to control locking/unlocking of a door of the vehicle based upon detection of presence/absence of a command by the user of a predetermined locking/unlocking operation directed to the vehicle.

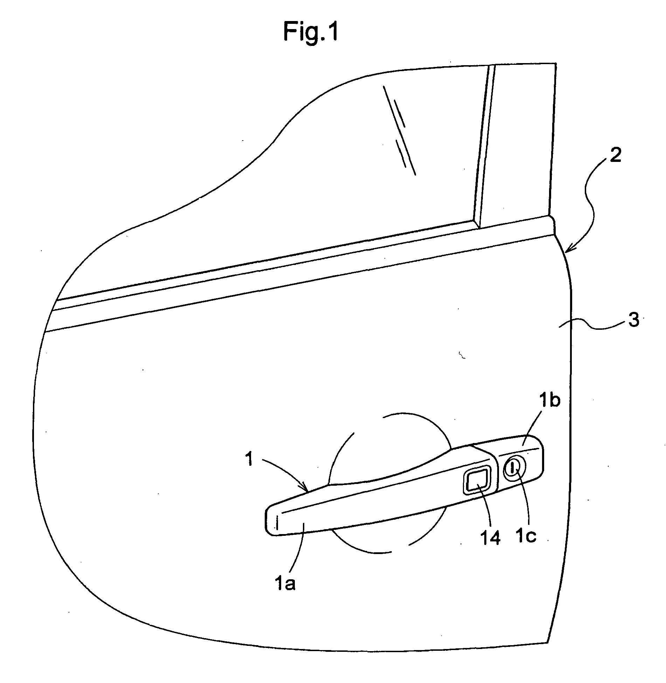

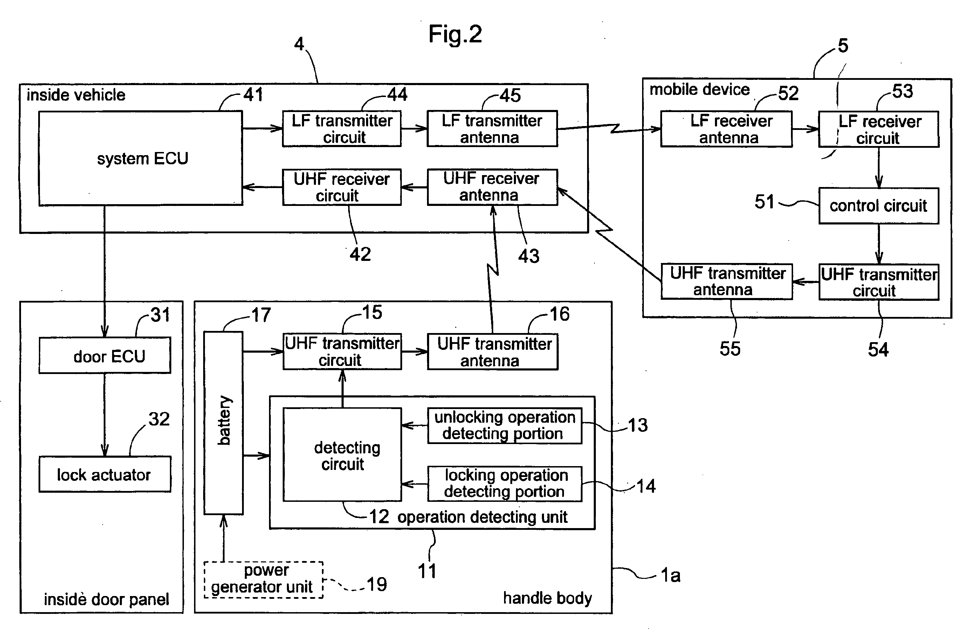

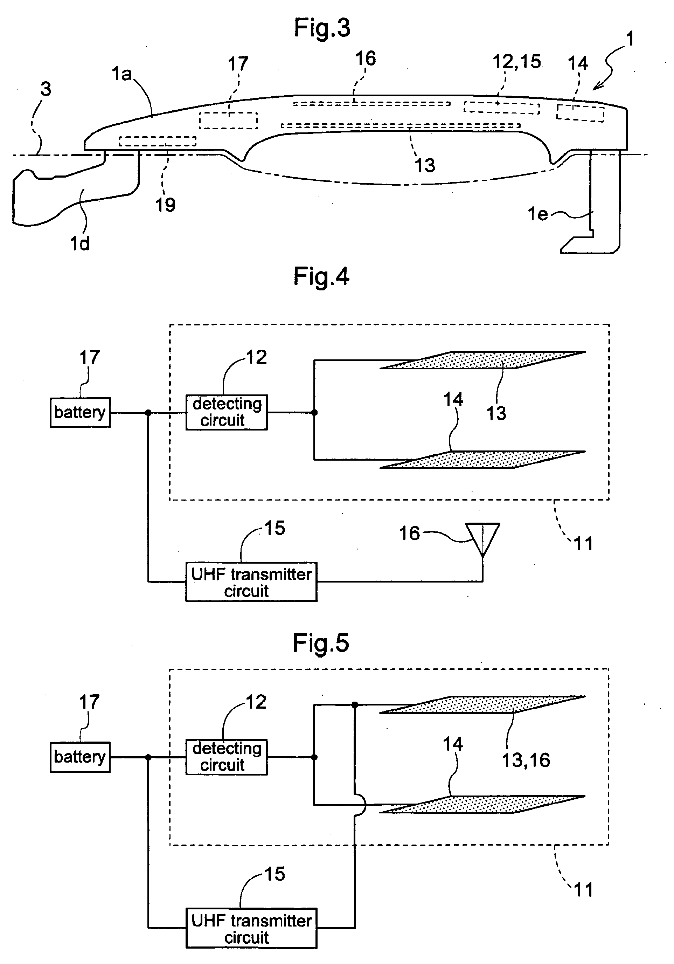

First, the general construction of the locking system will be described. Fig. 1 is a perspective view showing an example of a vehicle door 2 equipped with the inventive door handle 1. Fig. 2 is a block diagram schematically illustrating an example of the system construction of the locking system. Fig. 3 is a side view of a handle body 1a of the door handle 1, with broken lines therein showing an example of its inner construction. The locking system can be modified to control opening/closing of the door 2 also, like some of such systems currently available. In this embodiment, however, the locking system is configured to control only locking/unlocking of the door 2, not controlling opening/closing thereof.

The door handle 1 is supported by a handle frame (not shown) mounted inside a door panel 3 of the door 2. A mark 1d shown in Fig. 3 denotes a hinge portion acting as a pivot for the door handle 1 when this handle 1 is pulled. A mark 1e denotes an arm portion. The door handle 1 includes the door handle body 1a and a handle cap 1b. The handle cap 1b holds therein a key cylinder 1c for mechanically locking/unlocking the door 2 through a manual operation by a user having a mechanical key. A face of the handle body 1a opposed to the door 2 (door panel 3) is formed as a concave face, thus ensuring a sufficient clearance for allowing insertion of the user's hand between the door panel 3 and the handle body 1. A concave portion is formed also in the door panel 3 opposed to the handle body 1a as shown in Fig. 1. With this, it is advantageously possible to form the door body 1a compact, while ensuring sufficient clearance for allowing insertion of the user's hand between the door handle 1 and the door panel 3. The handle body 1a corresponds to what is defined herein as a "housing" of the inventive door handle.

The locking system of this embodiment includes, as a core component thereof, a system ECU (Electric Control Unit) 41 mounted on a vehicle 4, as shown in Fig. 2. This system ECU 41 corresponds to what is defined herein as a "locking/unlocking control unit" and comprises an electric circuitry such a microcomputer or the like. When a user (driver) carrying a mobile device 5 approaches the vehicle, the system ECU 41 effects authentication whether this mobile device 5 is a mobile device 5 corresponding to this vehicle 4 or not. Upon authentication of the mobile device 5 as being a mobile device corresponding to the vehicle 4, the system ECU 41 drives a lock actuator 32 via a door ECU 31 under a predetermined condition, thereby to unlock the door 2. The lock actuator 32 comprises a motor, a solenoid or the like for operating a locking mechanism of the door 2 based upon an electric signal.

In the instant embodiment, the above-described "predetermined condition" comprises occurrence or execution of a "positive" action effected by the user on the door handle 1. Some non-limiting examples of such positive action are user's touching on the door handle 1 and user's pulling of the door handle 1. This operation is detected by an operation detecting unit 11 and will be transmitted to the system ECU 41 through a wireless communication arrangement to be described later. Next, an example of locking/unlocking control scheme executed by the inventive system will be described.

First, unlocking control will be described. Let us now suppose the vehicle 4 is currently locked and parked and a user carrying the mobile device 5 is present outside the vehicle 4. The system ECU 41 transmits a request signal from the vehicle 4 toward to the mobile device 5 via an LF transmitter circuit 44 and an LF transmitter antenna 45 that are mounted in the vehicle 4. More particularly, in the instant embodiment, the LF transmitter circuit 44 modulates the request information with using a carrier wave having an LF (low frequency) range of 130 kHz approximately to generate a request signal and transmits this request signal via the LF transmitter antenna 45. The LF transmitter antenna 45 is an antenna having sensitivity in this LF range. A plurality of such request signals are transmitted intermittently by a predetermined interval. Incidentally, this LF range corresponds to what is defined herein as "first frequency range". Further, the LF transmitter circuit 44 corresponds to what is defined herein as the "first transmitter unit" and the LF transmitter antenna 45 corresponds to what is defined herein as the "first antenna" in the present invention.

The request information contains an ID code for identifying the vehicle 4, a condition code indicative of the vehicle 4 is now under locked state, for example. Further, in case a plurality of LF transmitter antennas 45 are mounted on the vehicle 4, the request information is to contain also an ID code for identifying an LF transmitter antenna 45 that has received the request signal. For instance, in case the LF transmitter antennas 45 are provided at three positions of a driver's seat door, a passenger's seat door and a rear door, the LF transmitter circuit 44 will modulate request information corresponding to each door to genera a request signal. And, the LF transmitter circuit 44 transmits this request signal via the LF antenna corresponding to this generated request signal. According to a preferred arrangement for avoiding crosstalk, the LF antennas at the three positions are to transmit the request signals one after another from the LF antennas 45 at the three positions.

When a user carrying the mobile device 5 has entered a transmittable range of the request signal, namely, a predetermined area adjacent the vehicle 4, a control circuit 51 incorporated in the mobile device 5 receives the request signal via an LF transmitter antenna 52 and an LF transmitter circuit 53. Then, the control circuit 51 of the mobile device 5 transmits a response signal to the request signal via a UHF transmitter circuit 54 and a UHF transmitter antenna 55. This response signal is a signal which has undergone modulation in the UHF transmitter circuit 54 with a carrier wave having a UHF (Ultra High Frequency) range. In the instant embodiment, the frequency of this carrier wave is 300 MHz approximately, and what is defined herein as the "second frequency range" in the present invention corresponds to this UHF range. In the instant embodiment, the second frequency range is a frequency range different from the first frequency rang. It is understood, however, that the present invention is not limited thereto, the invention allowing also the first frequency range and the second frequency range being same.

Incidentally, the mobile device 5 acts also as a "remote controller" capable of remotely controlling locking/unlocking of the door 2 by a key or button operation by a user. And, a locking/unlocking request signal from this device 5 as a remote controller is also transmitted over the carrier wave in the UHF range.

The response signal and the locking/unlocking request signal that are transmitted from the mobile device 5 are received by a UHF receiver antenna 43 installed in a door mirror, a rear view mirror or the like disposed inside the vehicle 4 and are transmitted to the system ECU 41 via a UHF receiver circuit 42 mounted inside the vehicle 4. The UHF receiver antenna 43 is an antenna having sensitivity in the UHF range which is the second frequency range and this antenna 43 corresponds to what is defined herein as the "first receiver antenna" in the present invention. The UFF receiver circuit 42 is a circuit for demodulating response information from response signals received via the UHF receiver antenna 43 and this circuit corresponds to what is defined herein as the "first receiver unit" in the present invention.

The system ECU41 effects authentication of the mobile device 5 based on the ID code contained in the response signal or the locking/unlocking request signal transmitted from the mobile device 5. Specifically, if a received ID code is in agreement with a predetermined ID code, the system ECU 41 authenticates the mobile device 5 that transmitted to the response signal or the locking/unlocking signal as the mobile device 5 corresponding to this vehicle 4. And, if the system ECU 41 has authenticated the mobile device 5 based on a locking/unlocking request signal, the lock actuator 32 is driven to lock/unlock the door 2. In the instant case, since the vehicle 4 is currently under the locked condition, the door 2 will be unlocked. On the other hand, if the system ECU 41 has authenticated the mobile device 5 based on a response signal to a request signal, the system will await an unlocking command for the door 2, that is, will await an operational input by the user.

A preferred example of an unlocking command for the door 2, i.e. an user's operation for commanding a predetermined unlocking operation to the vehicle 4 is a user's execution of a positive operation on the door handle 1, such as the user's gripping the door handle 1. For instance, when the user carrying the mobile device 5 approaches the vehicle 4 and touches the door handle 1, this user's positive operation is detected by the operation detecting unit 11 accommodated inside the door handle body 1a. More particularly, the user's positive operation is detected by a unlocking operation detecting unit 13 and a detecting circuit 12 which are accommodated inside the handle body 1a. The unlocking operation detecting unit 13 and the detecting circuit 12 correspond to what is defined herein as the "unlocking operation detecting subunit" in the present invention. The result of detection by the operation detecting unit 11 (unlocking operation detecting subunit) is transmitted wirelessly via the UHF transmitter circuit 15 and the UHF transmitter antenna 16 both of which are accommodated inside the handle body 1a, and transmitted eventually to the system ECU 41 via the UHF receiver antenna 43 and the UHF receiver circuit 42 which are mounted on the vehicle 4.

The UHF transmitter antenna 16 is an antenna having sensitivity in a predetermined frequency range ("third frequency range"). And, the UHF circuit 15 is a circuit configured to modulate the detection result of the operation detecting unit 11 as operation command information, with using a carrier wave having the predetermined frequency range (third frequency range) and transmits resultant operation command signal via the UHF transmitter antenna 16. The UHF transmitter antenna 16 corresponds to what is defined herein as the "transmitter antenna" of the vehicle door handle of the present invention and corresponds also to what is defined herein as the "second transmitter antenna" of the locking system of the present invention. Further, the UHF transmitter circuit 15 corresponds to what is defined herein as the "transmitter unit" of the vehicle door handle of the present invention and corresponds also to what is defined herein as the "second transmitter unit" of the inventive locking system. The UHF receiver antenna 42 mounted on the vehicle 4 corresponds to what is defined herein as the "receiver unit" of the inventive vehicle door handle and corresponds also to what is defined herein as the "second receiver antenna" of the inventive locking system. Also, the UHF receiver antenna 43 mounted on the vehicle 4 corresponds what is defined herein as the "second receiver antenna" of the inventive locking system.

The frequency range to which the UHF transmitter antenna 16 has sensitivity is UHF range of 300 MHz for instance. This UHF range corresponds to what is defined herein as the "predetermined frequency range" in the vehicle door handle of the present invention and corresponds also to what is defined herein as the "third frequency range" in the locking system of the present invention. Incidentally, in the present case, the frequency range ("second frequency range") of the carrier wave used for modulation by the UHF transmitter circuit 54 of the mobile device 5 and the frequency range ("predetermined frequency range" or "third frequency range") of the carrier wave used for modulation by the UHF transmitter circuit 15 accommodated inside the handle body 1a are identical to each other. Therefore, in the locking system of the present invention, the UHF transmitter antenna 43 corresponding to the "first transmitter antenna" having sensitivity in the second frequency range, corresponds also to what is defined herein as the "second transmitter antenna having sensitivity in the third frequency range". Similarly, in the inventive locking system, the UHF receiver circuit 42 corresponding to the "first receiver unit" configured to receive and demodulate a response signal in the second frequency range corresponds also to what is defined herein as the "second receiver unit".

Incidentally, in the present case, the "second receiver antenna" of the inventive locking system acts also as the "first receiver antenna" and the "second receiver unit" acts also as the "first receiver unit". However, the present invention is not limited thereto. The invention permits such alternative arrangements of the second frequency range being same as the third frequency range, providing the "second receiver antenna" separately from the "first receiver antenna", providing the "second receiver unit" separately from the "first receiver unit", etc. Moreover, the second frequency range may be a frequency range different from the third frequency range, as a matter of course.

The system ECU 41 which has received the operation command information from the UHF receiver circuit 42 has already authenticated the mobile device 5 based upon the response signal to the request signal and is now under the condition awaiting an unlocking operation command for the door 2. The operation command information is information indicative of presence of an unlocking command for the door 2, namely, execution or occurrence of the user's operation. Therefore, based on the response information and the operation command information, the system ECU 41 drives the lock actuator 32 via the door ECU 31, thereby to unlock the door 2.

In the above described case, the system ECU 41 first completes authentication of the mobile device 5 and then awaits operation command information of the user. Instead, the authentication of the mobile device 5 may be effected after receipt of the operation command information of the user. In this regard, since the user has operated the door handle 1, it may be assumed that the mobile device 5 carried by this user should be present in sufficient vicinity of the vehicle 4. So, the wireless communication should be readily established. Therefore, the authentication of the mobile device 5 too will be executed without delay. In this case, the request signal is not constantly transmitted from the vehicle 4 which is now locked and parked. Therefore, wasteful consumption of battery power can be restricted advantageously, in case the battery 4 of the vehicle 4 has only a limited capacity.

Further alternatively, the above two arrangements can be used in combination. According to one example of such alternative construction, normally, the system ECU 41 completes the authentication of the mobile device 5 first and then waits for operation command information of the user. And, if the system does not receive operation command information for a predetermined extended period such as a period of one month, then, the arrangement will be changed. With this, it is possible to construct a superior system that can restrict waste of battery power in case the vehicle 4 remains unused for a long period of time and that also can provide superior responsiveness in normal time e.g. when the vehicle 4 is frequently used.

In the above, there has been explained an example of the unlocking control by the inventive system. On the other hand, incase the user carrying the mobile device 5 gets out of the vehicle and effects a predetermined positive operation such as touching on the door handle 1, the door 2 will be locked. The sequence of this locking control is similar to that of the unlocking control described above. But, this locking control will be described briefly next.

When the user carrying the mobile device 5 is present inside the vehicle 4, no communication is established between the mobile device 5 and the vehicle 4. That is, no authentication of the mobile device 5 has taken place yet. Then, it may be arranged such that in the above situation, a transmitter means (not shown) provided inside the vehicle transmits a request signal to the mobile device 5 for confirming this mobile device 5 being present inside the vehicle and the mobile device 5 responds to this signal, and the system ECU 41 recognizes the presence of the mobile device 5 inside the vehicle. From this condition, if the user carrying the mobile device 5 goes out of the vehicle, the system ECU 41 will now recognize absence of the mobile device 5 inside the vehicle and also communication will be established between the mobile device 5 now located outside the vehicle and the vehicle 4. This communication is effected similarly to the unlocking control.

Under the unlocked condition of the door 2, once communication has been established between the mobile device 5 outside the vehicle and the vehicle 4, that is, upon completion of authentication of the mobile device 5, the system ECU 41 then awaits input of locking operation command information. Then, if the user moves his/her hand (fingers) closer to or contacts his/her hand (fingers) on the locking operation detecting portion 14 of the door handle 1, this operation is detected by the operation detecting unit 11 including the locking operation detecting portion 14 and the detecting circuit 12. Incidentally, the locking operation detecting portion 14 and the detecting circuit 12 together constitute what is defined herein as the "locking operation detecting subunit" in the present invention.

This detection result is transmitted as operation command information from the detecting circuit 12 to the UHF transmitter circuit 15. Then, the UHF transmitter circuit modulates this operation command information to generate an operation command signal and transmits this signal via the UHF transmitter antenna 16. This transmitted operation command signal is received via the UHF receiver antenna 43 by the UHF receiver circuit 42 and demodulated therein. The system ECU 41 receives the resultant demodulated operation command information. As described above, since the system ECU 41 has been under the condition awaiting input of locking operation command information. So, upon receipt of the operation command information, the system ECU 41 drives the lock actuator 32 via the door ECU 31, thereby to lock the door 2. That is, the system ECU 41 effects locking control of the door 2, based upon the response information and the operation command information.

Preferably, the operation detecting unit 11 is comprised of a capacitance sensor. In this way, the operation detecting unit 11 can be formed inexpensively and compact. Fig. 4 is a block diagram schematically illustrating an exemplary inner construction of the handle body 1a. As shown, the capacitance sensor includes sensor electrodes. In the example shown, two sensor electrodes comprise the unlocking operation detecting portion 13 and the locking operation detecting portion 14, respectively. As shown in Fig. 3, the sensor electrode functioning as the unlocking operation detecting portion 13 is disposed inside the handle body 1a on the side facing the door panel 3. Also, the sensor electrode functioning as the locking operation detecting portion 14 is disposed inside the handle body 1a on the side opposite to the side facing the door panel 3. The sensor electrode functioning as the unlocking operation detecting portion 13 is formed as an elongate electrode so as to detect an approaching movement or contacting of the user's hand gripping the door handle 1 over a wide detection area. On the other hand, as shown in Figs. 1 and 3, the sensor electrode functioning as the locking operation detecting portion 14 in this example is formed as a small electrode since a small detection area is sufficient as this is to be operated in a pin-point manner by a user's finger or the like.

Fig. 5 is a block diagram schematically illustrating a further exemplary inner construction of the handle body 1a. In this example, the sensor electrode which is an elongate electrode and functions as the unlocking operation detecting portion 13 is used also as a UHF transmitter antenna 16. With this arrangement, it is possible to reduce the number of parts, thus making it possible to provide the door handle 1 at lower costs. This sensor electrode functioning as the unlocking operation detecting portion 13 is disposed on the side facing the door panel 3 inside the handle body 1a. So, the UHF transmitter antenna 16 for transmitting wireless signals to the vehicle 4 can be disposed at a position close to the vehicle 4. Incidentally, in the construction illustrated in Fig. 3, the unlocking operation detecting portion 13 and the UHF transmitter antenna 16 may be disposed in juxtaposition along the direction perpendicular to the plane of this figure, so as to allow the UHF transmitter antenna 16 to be disposed near the vehicle 4.

Incidentally, in the above-described example, the unlocking operation detecting portion 13 and the locking operation detecting portion 14 co-utilize the same detecting circuit 12. Instead, these operation detecting portions may use separate detecting circuits. Further, in the foregoing examples, the unlocking operation detecting portion 13 and the locking detecting portion 14 are provided independently of each other. The invention is not limited to such construction. These detecting portions need not be provided independently. Namely, the system ECU 41 is capable of recognizing the locked/unlocked condition of the door 2, i.e. whether the door 2 is locked or unlocked. Further, as described hereinbefore, the system ECU 41 is capable of recognizing also the "whereabouts" of the mobile device 5, i.e. whether it is present inside the vehicle or outside the vehicle or non-existent at all. Hence, the system ECU 41 can recognize in advance whether a user is to effect a locking operation or an unlocking operation and can determine which of a locking operation command or an unlocking operation command is to be awaited. And, based on these, upon receipt of a single "trigger", i.e. operation command information, the system ECU 41 can now execute either locking control or unlocking control. For this reason, the operation detecting unit 11 can be comprised of a single operation detecting portion and a single detecting circuit.

Further, in the foregoing example, the operation detecting unit 11 is comprised of a capacitance sensor. Instead, the operation detecting portion may be comprised of other sensors, switches, or the like. Needless to say, however, it is also possible to form the unlocking operation detecting portion 13 of a capacitance sensor and to form the locking operation detecting portion 14 of a switch. That is to say, the sole requirement for the operation detecting unit 11 is an arrangement capable of detecting an operation to the door handle 1 as a locking/unlocking operation command directed to the vehicle 4.

As described hereinbefore, the operation detecting unit 11, the UHF transmitter antenna 16, and the UHF receiver circuit 15 are all accommodated inside the handle body 1a ("housing"). That is to say, no electric wires connected to these respective functional units extend from the handle body 1a to its outside, rather, all the electric circuits are confined within the handle body 1a. Therefore, the handle body 1a accommodates also therein a battery 17 for supplying power to the operation detecting unit 11 and the UHF transmitter circuit 15.

According to a preferred arrangement for restricting power consumption of the battery 17, the operation detecting unit 11 is configured to operate intermittently by a predetermined interval for detection of a locking/unlocking operation command, rather than operate constantly. For instance, if the unit 11 is configured to operate every 1 second, the responsiveness of the unit will not be impaired significantly, while the power consumption of the battery 17 can be restricted.

Similarly, it is advantageous to configure the UHF transmitter circuit 15 also to operate intermittently. In this regard, however, the UHF transmitter circuit 15 need not effect the modulation or transmission unless the operation detecting unit 11 detects a locking/unlocking operation command. Therefore, it will be even more advantageous to configure the UHF transmitter circuit 15 to pause until detection of locking/unlocking operation command by the operation detecting unit 11 and to be activated upon such detection to effect the modulation and the transmission. This arrangement allows even further restriction of power consumption of the battery 17.

Incidentally, in recent years, there have been proposed various techniques enabling generation of electric power from small vibrations. According to one such proposed technique, a capacitor comprises a piezoelectric material formed of aluminum nitrate, sandwiched between a platinum electrode and an aluminum electrode. And, this capacitor is placed on a cantilever having a weight attached to the leading end of the beam, thereby to form an energy converter device as a whole. In operation, when this device receives some vibration, the leading end of its beam is vibrated, such that electric power is generated through piezoelectric conversion (a magazine article on IMEC, a Belgian research institute: "Development of Device Converging Vibration on Vehicle to Electric Power", Nikkei Electronics November 3, 2008 issue, p. 201, section 9).

Also proposed is a technique wherein two elements formed of an electrically charged substance called, "*Electlet*" or silicon are juxtaposed horizontally with a spacing of a few 10 µm and in response to displacement occurring therebetween due to vibration, electric power is generated (a newspaper article on SANYO Electric Co., Ltd.: "Power Generation by Walking Vibration", Nikkei Newspapers, November 11, 2008 morning edition, 14th Edition, page 13 (business page 2)).

Further proposed is a vibration power generation device configured such that electricity is stored by electrostatic induction under a stationary condition between an *Electlet* electrode substrate and a metal electrode substrate opposed thereto, and in response to movement of one of the electrode plates due to vibration, the electric power is obtained therefrom (News Release by OMRON Corporation, November 11, 2008: "Compact "Environmental Vibration Power Generator Device" Generating Power by Small Vibration Developed" [web searched on November 13, 2008] Internet,< URL: http://www.omron.co.jp/press/2008/11/c1111.html>).

In this way, there have been proposed various kinds of techniques capable of generating power from small vibrations. As shown by broken lines in Fig. 2, if a power generating unit 19 adopting one of these techniques is provided inside the handle body 1a for allowing charging of the battery 17, the service life of the battery 17 can be further extended. And, this power generating unit 19 also does not require connection of any electric wire from the outside of the handle body 1a. Therefore, the door handle 1 can be constructed as an electrically independent unit, with elimination of electric wires connecting between the circuits mounted on the vehicle 4 side including the door panel 3 and the circuit mounted inside the handle 1.

As described above, even with the construction wherein the circuits and the battery 17 are accommodated inside the handle body 1a, with no connection of electric wires from the outside, it is still possible to implement the technique of restricting power consumption of the battery 17 by causing the circuits inside the handle body 1a to operate intermittently. Further, as described above, the door handle 1a ("housing") can accommodate therein also the power generating means that does not need connection of any electric wires from the outside at all and the battery 17 can be charged too. Therefore, the door handle 1 can effectively provide its function for an extended period of time. That is to say, the concern relating to lifetime due to elimination of electric wires including a wire for power supply is solved by the power saving technique and power generating/charging technique.

As described above, according to the present invention, there can be provided a door handle that can be applied to a smart entry system without any electric wires extending to the outside of the door panel, unlike the conventional door handle. As the inventive door handle does not require any electric wiring to the inside of a door panel, this door handle can be used widely, without dependence on the type of the vehicle. Therefore, through the mass production effect, the cost of the door handle can be reduced significantly. Further, it is also possible to reduce the number of steps in the manufacturing process associated with laying out and connections of such electric wires, whereby the productivity is improved. Moreover, thanks to the reductions in the parts costs and the manufacturing costs made possible, the invention allows mounting of the locking system such as the smart entry system on a greater number of vehicles.

## Claims

1. A door handle (1) for a vehicle, configured to authenticate a mobile device (5) carried by a user through wireless communication between this mobile device (5) and the vehicle and to control locking/unlocking of a vehicle door (2) based on detection of presence/absence of an operation by the user of commanding a predetermined locking/unlocking operation, the door handle (1) comprising:
an operation detecting unit (11) for detecting an operation on the vehicle door handle (1) as an operation commanding locking/unlocking to the vehicle;
a transmitter antenna (16) having sensitivity in a predetermined frequency range;
a transmitter unit (15) configured to modulate result of detection by said operation detecting unit (11) with using a carrier wave having said predetermined frequency range and transmitting the detection result to the vehicle via said transmitter antenna (16);
a battery (17) for supplying power to said operation detecting unit (11) and said transmitter unit (15); and
a housing (1a) configured to accommodate therein said operation detecting unit (11), said transmitter antenna (16), said transmitter unit (15) and said battery (17) altogether, without any wires extending to the outside of the housing (1a);
**characterized in that**
said operation detecting unit (11) comprises a capacitance sensor having at least one sensor electrode (13), and said transmitter antenna (16) co-uses said one sensor electrode (13).

2. The door handle (1) for a vehicle according to claim 1, wherein said transmitter unit (15) modulates the result of detection by said operation detecting unit (11) with using the carrier wave having a same frequency range as a frequency range of a carrier wave to be demodulated by a receiver unit (42) provided in the vehicle for receiving a wireless signal from the mobile device (5).

3. The door handle (1) for a vehicle according to claim 1 or 2, wherein said operation detecting unit (11) is configured to operate intermittently to enable detection of locking/unlocking command by a predetermined cycle.

4. The door handle (1) for a vehicle according to any one of claims 1-3, wherein said transmitter unit (15) is configured to pause until detection by the operation detecting unit (11) of presence of the locking/unlocking command and to be activated in response to the detection of presence of the locking/unlocking command.

5. The door handle (1) for a vehicle according to any one of claims 1-4, wherein said operation detecting unit (11) includes a locking operation detecting subunit (14) for detecting a user's command for locking operation and an unlocking operation detecting subunit (13) for detecting a user's command for unlocking operation.

6. The door handle (1) for a vehicle according to any one of claims 1-5, wherein said housing (1a) includes a power generator unit (19) configured to generate power in response to vibration, and said battery (17) is a rechargeable battery configured to be charged by power generated by said power generator unit (19).

7. A locking system comprising:
a first transmitter antenna (45) mounted on a vehicle and having sensitivity in a first frequency range;
a first transmitter unit (44) provided in the vehicle and configured to modulate request information with using a carrier wave having said first frequency range and transmit a request signal via said first transmitter antenna (45);
a mobile device (5) carried by a user and configured to receive said request signal and transmit a response signal modulated with using a carrier wave having a second frequency range;
a first receiver antenna (43) provided in the vehicle and having sensitivity in said second frequency range;
a first receiver unit (42) provided in the vehicle and configured to receive the response signal via said first receiver antenna (43) and demodulate this to response information;
an operation detecting unit (11) accommodated inside a housing (1a) of a door handle (1) provided in a door (2) of the vehicle without any electric wiring extending to the outside of the housing (1a), said operation detecting unit (11) being configured to detect presence/absence of a command by said user of a predetermined locking/unlocking operation to said door handle (1);
a second transmitter antenna (16) accommodated inside said housing (1a) and having sensitivity in a third frequency range;
a second transmitter unit (15) accommodated inside said housing (1a) and configured to modulate operation command information as result of detection by said operation detecting unit (11), with using a carrier wave having said third frequency range and transmit an operation command signal via said second transmitter antenna (16);
a second receiver unit (42) provided in the vehicle and configured to receive said operation command signal via a second receiver antenna (43) and demodulate this signal to operation command information; and
a locking/unlocking controller unit (31) provided in the vehicle and configured to control locking/unlocking of a door (2) of the vehicle, based upon said response information and said operation command information,
**characterized in that**
said operation detecting unit (11) comprises a capacitance sensor having at least one sensor electrode (13), and said second transmitter antenna (16) co-uses said one sensor electrode (13).

8. The locking system according to claim 7, wherein said second frequency range is a frequency range that is different from said first frequency range and said third frequency range is a frequency range that is same as said second frequency range.

9. The locking system according to claim 8, wherein said first receiver antenna (43) acts also as said second receiver antenna (43) and said first receiver unit (42) acts also as said second receiver unit (42).

## Patentansprüche

1. Türgriff (1) für ein Fahrzeug, das dazu eingerichtet ist, um ein durch einen Benutzer getragenes Mobilgerät (5) zu authentifizieren mittels kabel loser Kommunikation zwischen diesem Mobilgerät (5) und dem Fahrzeug, und um ein Sperren/Entsperren einer Fahrzeugtür (2) basierend auf einer Erfassung einer Anwesenheit/Abwesenheit eines Bedienungsbefehls einer vorbestimmten Sperr-/Entsperrbedienung durch den Benutzer zu steuern, wobei der Türgriff (1) aufweist
eine Bedienungserfassungseinheit (11) zur Erfassung einer Bedienung an dem Fahrzeugtürgriff (1) als eine dem Fahrzeug ein Sperren/Entsperren befehlende Bedienung,
eine Übertragungseinrichtungsantenne (16) mit einer Empfindlichkeit ein einem vorbestimmten Frequenzbereich,
eine Übertragungseinheit (15), die dazu eingerichtet ist, um ein Ergebnis einer Erfassung durch die Bedienungserfassungseinheit (11) unter Verwendung einer Trägerwelle mit dem vorbestimmten Frequenzbereich zu modulieren, und die das Erfassungsergebnis mittels der Übertragungseinrichtungsantenne (16) an das Fahrzeug überträgt,
eine Batterie (17) zur Zufuhr von Energie zu der Bedienungserfassungseinheit (11) und der Übertragungseinheit (15), und
ein Gehäuse (1a), das dazu eingerichtet ist, um darin die Bedienungserfassungseinheit (11), die Übertragungseinrichtungsantenne (16), die Übertragungseinheit (15), und die Batterie (17) zusammen zu beherbergen, ohne dass sich irgendwelche Drähte zu dem Äußeren des Gehäuses (1a) hin erstrecken,
**dadurch gekennzeichnet, dass**
die Bedienungserfassungseinheit (11) einen Kapazitätssensor mit zumindest einer Sensorelektrode (13) aufweist, und die Übertragungseinrichtungsantenne (16) die eine Sensorelektrode (13) mit nutzt.

2. Türgriff (1) für ein Fahrzeug nach Anspruch 1, wobei die Übertragungseinheit (15) das Ergebnis einer Erfassung durch die Bedienungserfassungseinheit (11) unter Verwendung der Trägerwelle mit einem Frequenzbereich gleich einem Frequenzbereich einer durch eine zum Empfang eines kabellosen Signals von dem Mobilgerät (5) in dem Fahrzeug bereitgestellten Empfangseinheit (42) zu demodulierenden Trägerwelle moduliert.

3. Türgriff (1) für ein Fahrzeug nach Anspruch 1 oder 2, wobei die Bedienungserfassungseinheit (11) dazu eingerichtet ist, um periodisch in Betrieb zu sein, um mit einem vorbestimmten Zyklus eine Erfassung eines Sperr-/Entsperrbefehls zu ermöglichen.

4. Türgriff (1) für ein Fahrzeug nach einem der Ansprüche 1 bis 3, wobei die Übertragungseinheit (15) dazu eingerichtet ist, um bis zu einer Erfassung einer Anwesenheit des Sperr-/Entsperrbefehls durch die Bedienungserfassungseinheit (11) zu pausieren, und um aktiviert zu sein als Reaktion auf die Erfassung einer Anwesenheit des Sperr-/Entsperrbefehls.

5. Türgriff (1) für ein Fahrzeug nach einem der Ansprüche 1 bis 4, wobei die Bedienungserfassungseinheit (11) eine Sperrbedienungserfassungsuntereinheit (14) zur Erfassung eines Sperrbedienungsbefehls eines Benutzers und eine Entsperrbedienungserfassungsuntereinheit (13) zur Erfassung eines Entsperrbedienungsefehls eines Benutzers enthält.

6. Türgriff (1) für ein Fahrzeug nach einem der Ansprüche 1 bis 5, wobei das Gehäuse (1a) eine Energieerzeugungseinheit (19) enthält, die dazu eingerichtet ist, um Energie als Reaktion auf Vibration zu erzeugen, und wobei die Batterie (17) eine wiederaufladbare Batterie ist, die dazu eingerichtet ist, um mittels durch die Energieerzeugungseinheit (19) erzeugter Energie aufgeladen zu sein.

7. Sperrsystem, mit
einer ersten Übertragungseinrichtungsantenne (45), die an einem Fahrzeug montiert ist und eine Empfindlichkeit in einem ersten Frequenzbereich aufweist,
einer ersten Übertragungseinheit (44), die in dem Fahrzeug bereitgestellt ist und dazu eingerichtet ist, um Anforderungsinformation unter Verwendung einer Trägerwelle mit dem ersten Frequenzbereich zu modulieren, und ein Anforderungssignal über die erste Übertragungseinrichtungsantenne (45) zu übertragen,
einem durch einen Benutzer getragenen Mobilgerät (5), das dazu eingerichtet ist, um das Anforderungssignal zu empfangen, und ein unter Verwendung einer Trägerwelle mit einem zweiten Frequenzbereich moduliertes Antwortsignal zu übertragen,
einer ersten Empfangseinrichtungsantenne (43), die in dem Fahrzeug bereitgestellt ist und eine Empfindlichkeit in dem zweiten Frequenzbereich aufweist,
einer ersten Empfangseinheit (42), die in dem Fahrzeug bereitgestellt ist und dazu eingerichtet ist, um das Antwortsignal über die erste Empfangseinrichtungsantenne (43) zu empfangen und dieses zu Antwortinformation zu demodulieren,
einer Bedienungserfassungseinheit (11), die innerhalb eines Gehäuses (1a) eines in einer Tür (2) des Fahrzeugs bereitgestellten Türgriffs (1) beherbergt ist, ohne dass sich irgendeine elektrische Verdrahtung zu dem Äußeren des Gehäuses (1a) hin erstrecken, wobei die Bedienungserfassungseinheit (11) dazu eingerichtet ist, um Anwesenheit/Abwesenheit eines Befehls einer vorbestimmten Sperr-/Entsperrbedienung des Türgriffs (1) durch einen Benutzer zu erfassen,
einer zweiten Übertragungseinrichtungsantenne (16), die innerhalb des Gehäuses (1a) beherbergt ist und eine Empfindlichkeit in einem dritten Frequenzbereich aufweist,
einer zweiten Übertragungseinheit (15), die innerhalb des Gehäuses (1a) beherbergt ist und dazu eingerichtet ist, um Bedienungsbefehlsinformation als Ergebnis einer Erfassung durch die Bedienungserfassungseinheit (11) unter Verwendung einer Trägerwelle mit dem dritten Frequenzbereich zu modulieren und ein Bedienungsbefehlssignal mittels der zweiten Übertragungsantenne (16) zu übertragen,
einer zweiten Empfangseinheit (42), die in dem Fahrzeug bereitgestellt ist und dazu eingereichtet ist, um das Bedienungsbefehlssignal mittels einer zweiten Empfangseinrichtungsantenne (43) zu empfangen und dieses Signal zu Bedienungsbefehlsinformation zu demodulieren, und
einer Sperr-/Entsperrsteuereinheit (31), die in dem Fahrzeug bereitgestellt ist und dazu eingerichtet ist, um Sperren/Entsperren einer Tür (2) des Fahrzeugs zu steuern basierend auf der Antwortinformation und der Bedienungsbefehlsinformation,
**dadurch gekennzeichnet, dass**
die Bedienungserfassungseinheit (11) einen Kapazitätssensor mit zumindest einer Sensorelektrode (13) aufweist, und die zweite Übertragungseinrichtungsantenne (16) die eine Sensorelektrode (13) mitnutzt.

8. Sperrsystem nach Anspruch 7, wobei der zweite Frequenzbereich ein Frequenzbereich ist, der sich von dem ersten Frequenzbereich unterscheidet, und der dritte Frequenzbereich ein Frequenzbereich ist, der gleich wie der zweite Frequenzbereich ist.

9. Sperrsystem nach Anspruch 8, wobei die erste Empfangseinrichtungsantenne (43) auch als die zweite Empfangseinrichtungsantenne (43) wirkt, und die erste Empfangseinheit (42) auch als die zweite Empfangseinheit (42) wirkt.

## Revendications

1. Poignée de porte (1) pour un véhicule, configurée pour authentifier un dispositif mobile (5) porté par un utilisateur par l'intermédiaire d'une communication sans fil entre ce dispositif mobile (5) et le véhicule et pour commander le verrouillage/déverrouillage d'une porte de véhicule (2) sur la base d'une détection de la présence/absence d'une opération par l'utilisateur de commande d'une opération de verrouillage/déverrouillage prédéterminée, la poignée de porte (1) comportant :
une unité de détection d'opération (11) destinée à détecter une opération sur la poignée de porte de véhicule (1) en tant qu'opération commandant un verrouillage/déverrouillage pour le véhicule ;
une antenne d'émetteur (16) ayant une sensibilité dans une plage de fréquence prédéterminée ;
une unité d'émetteur (15) configurée pour moduler un résultat de détection par ladite unité de détection d'opération (11) avec l'utilisation d'une onde porteuse ayant ladite plage de fréquence prédéterminé et qui émet le résultat de détection vers le véhicule par l'intermédiaire de ladite antenne d'émetteur (16) ;
une batterie (17) destinée à délivrer de l'énergie à ladite unité de détection d'opération (11) et à ladite unité d'émetteur (15) ; et
un boîtier (1a) configuré pour recevoir ensemble ladite unité de détection d'opération (11), ladite antenne d'émetteur (16), ladite unité d'émetteur et ladite batterie (17), sans aucun fil s'étendant à l'extérieur du boîtier (1a) ;
**caractérisée en ce que**
ladite unité de détection d'opération (11) comporte un capteur capacitif ayant au moins une électrode de capteur (13), et ladite antenne d'émetteur utilise conjointement ladite électrode de capteur (13).

2. Poignée de porte (1) pour un véhicule selon la revendication 1, dans laquelle ladite unité d'émetteur (15) module le résultat de détection par ladite unité de détection d'opération (11) avec l'utilisation de l'onde porteuse ayant une même plage de fréquence qu'une plage de fréquence d'une onde porteuse devant être démodulée par une unité de récepteur (42) prévue dans le véhicule pour recevoir un signal sans fil provenant du dispositif mobile (5).

3. Poignée de porte (1) pour un véhicule selon la revendication 1 ou 2, dans laquelle ladite unité de détection d'opération (11) est configurée pour fonctionner par intermittence afin de permettre une détection de la commande de verrouillage/déverrouillage par un cycle prédéterminé.

4. Poignée de porte (1) pour un véhicule selon l'une quelconque des revendications 1 à 3, dans laquelle ladite unité d'émetteur (15) est configurée pour se mettre en pause jusqu'à une détection par l'unité de détection d'opération (11) de la présence de la commande de verrouillage/déverrouillage et pour être activée en réponse à la détection de la présence de la commande de verrouillage/déverrouillage.

5. Poignée de porte (1) pour un véhicule selon l'une quelconque des revendications 1 à 4, dans laquelle ladite unité de détection d'opération (11) comprend une unité secondaire de détection d'opération de verrouillage (14) destinée à détecter une commande d'utilisateur pour une opération de verrouillage et une unité secondaire de détection d'opération de déverrouillage (13) destinée à détecter une commande d'utilisateur pour une opération de déverrouillage.

6. Poignée de porte (1) pour un véhicule selon l'une quelconque des revendications 1 à 5, dans laquelle ledit boîtier (1a) comprend une unité de génération d'énergie (19) configurée pour générer de l'énergie en réponse à une vibration, et ladite batterie (17) est une batterie rechargeable configurée pour être chargée par l'énergie générée par ladite unité de génération d'énergie (19).

7. Système de verrouillage comportant :
une première antenne d'émetteur (45) montée sur un véhicule et ayant une sensibilité dans une première plage de fréquence ;
une première unité d'émetteur (44) prévue dans le véhicule et configurée pour moduler de l'information de demande avec l'utilisation d'une onde porteuse ayant ladite première plage de fréquence et émettre un signal de demande par l'intermédiaire de ladite première antenne d'émetteur (45) ;
un dispositif mobile (5) porté par un utilisateur et configuré pour recevoir ledit signal de demande et émettre un signal de réponse modulé avec l'utilisation d'une onde porteuse ayant une deuxième plage de fréquence ;
une première antenne de récepteur (43) prévue dans le véhicule et ayant une sensibilité dans ladite deuxième plage de fréquence ;
une première unité de récepteur (42) prévue dans le véhicule et configurée pour recevoir le signal de réponse par l'intermédiaire de ladite première antenne de récepteur (43) et pour démoduler cette information de réponse ;
une unité de détection d'opération (11) reçue à l'intérieur d'un boîtier (1a) d'une poignée de porte (1) prévue dans une porte (2) du véhicule sans aucun câblage électrique s'étendant à l'extérieur du boîtier (1a), ladite unité de détection d'opération (11) étant configurée pour détecter la présence/absence d'une commande par ledit utilisateur d'une opération de verrouillage/déverrouillage prédéterminée pour ladite poignée de porte (1) ;
une deuxième antenne d'émetteur (16) logée à l'intérieur dudit boîtier (1a) et ayant une sensibilité dans une troisième plage de fréquence ;
une deuxième unité d'émetteur (15) logée à l'intérieur dudit boîtiers (1a) et configurée pour moduler une information de commande d'opération comme résultat de détection par ladite unité de détection d'opération (11), avec l'utilisation d'une onde porteuse ayant ladite troisième plage de fréquence et pour transmettre un signal de commande d'opération par l'intermédiaire de ladite deuxième antenne d'émetteur (16) ;
une deuxième unité de récepteur (42) prévue dans le véhicule et configurée pour recevoir ledit signal de commande d'opération par l'intermédiaire d'une deuxième antenne de récepteur (43) et démoduler ce signal pour une information de commande d'opération ; et
une unité de commande de verrouillage/déverrouillage (31) prévue dans le véhicule et configurée pour commander un verrouillage/déverrouillage d'une porte (2) du véhicule, sur la base de ladite information de réponse et ladite information de commande d'opération,
**caractérisé en ce que**
ladite unité de détection d'opération (11) comporte un capteur capacitif ayant au moins une électrode de capteur (13), et ladite deuxième antenne d'émetteur (16) utilise conjointement ladite électrode de capteur (13).

8. Système de verrouillage selon la revendication 7, dans lequel ladite deuxième plage de fréquence est une plage de fréquence qui est différente de ladite première plage de fréquence et ladite troisième plage de fréquence est une plage de fréquence qui correspond à ladite deuxième plage de fréquence.

9. Système de verrouillage selon la revendication 8, dans lequel ladite première antenne de récepteur (43) agit également en tant que dite deuxième antenne de récepteur (43) et ladite première unité de récepteur (42) agit également en tant que dite deuxième unité de récepteur (42).
